# EUROPEAN PATENT SPECIFICATION

(11) **EP 0 684 689 B1**
(45) Date of publication and mention of the grant of the patent: **12.01.2000**
(21) Application number: 95202299.4
(22) Date of filing: 16.11.1994
(51) Int. Cl.: H02P 5/402, D06F 33/02

(54) **Method and device for controlling speed of a washing machine motor**
Verfahren und Vorrichtung zum Regeln der Drehzahl eines Waschmaschinenmotors
Procédé et dispositif pour commander la vitesse du moteur d'une machine à laver

(30) Priority: 16.11.1993 KR 9324065; 20.01.1994 KR 9401068; 29.03.1994 KR 9406365; 16.05.1994 KR 9410678; 17.05.1994 KR 9410853
(43) Date of publication of application: 29.11.1995
(62) Divisional of application: 94308465.7
(73) Proprietor: LG ELECTRONICS INC., Seoul (KR)
(72) Inventor: Cheong, Dal Ho, Mapo-ku, Seoul (KR); Sang, Doo Whan, Socho-ku, Seoul (KR)
(74) Representative: Cross, Rupert Edward Blount

(56) References cited:
- EP-A- 0 653 832
- US-A- 4 972 134
- US-A- 5 130 624

## Description

### FIELD OF THE INVENTION

This invention relates to devices for controlling speed of a washing machine motor, more particularly to devices for controlling speed of a washing machine motor by varying number of revolutions and changing direction of rotation of the motor through controlling phase of the motor.

### BACKGROUND OF THE INVENTION

A conventional device for controlling speed of a washing machine motor is to be explained hereinafter, referring to a Low Noise Type(G-Series) motor taken from Matsushita catalogue.

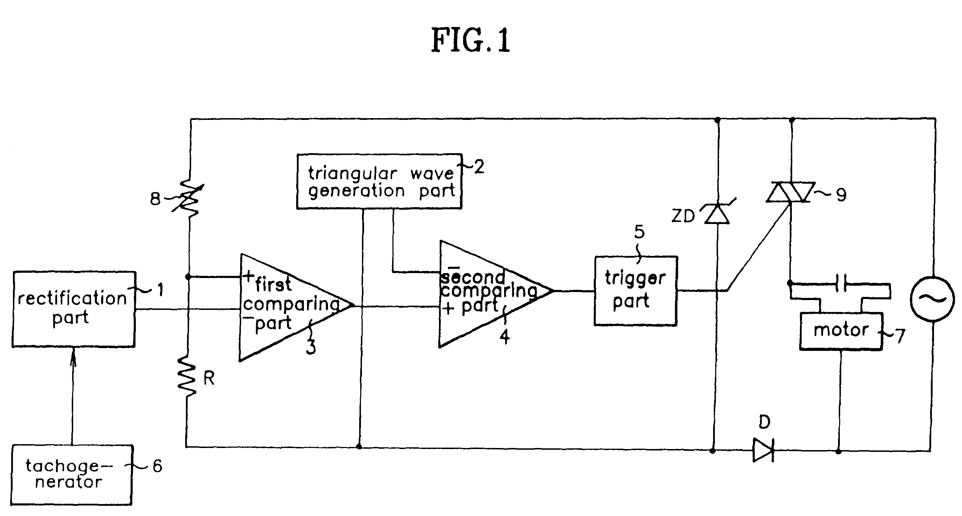

As shown in FIG.1, a conventional device for controlling speed of a washing machine motor includes a tachogenerator 6 for detecting number of revolutions of a washing machine motor 7, a rectification circuit part 1 for converting signals received from the tachogenerator 7 into direct current by rectifying and smoothing the signals, a variable resistor 8 for setting speed of rotation, a first comparing part 3 for comparing signals from the rectification circuit part 1 with signals varied by the variable resistor 8, a triangular wave generation part 2 for generating triangular pulse signals, a second comparing part 4 for comparing the triangular pulse signals received from the triangular wave generation part 2 with the signals received from the first comparing part 3, a trigger part 5 for triggering the signals received from the second comparing part 4 to control operation of the washing machine motor 7, and a triac 9 for turning on/off a driving power to the washing machine motor in response to the control signal of the trigger part 5.

Operation of the foregoing conventional device for controlling speed of a washing machine motor is to be explained hereinafter.

The tachosignal generated at the tachogenerator 6 in sine wave voltage proportional to the number of revolutions of the washing machine motor 7 is applied to the rectification circuit part 1, and rectified into direct current voltage therein. The direct current voltage from the rectification circuit part 1 is applied to the first comparing part 3 to compare with a voltage generated by the variable resistor 8 used for setting speed of rotation, and then applied to the second comparing part 2 to compare with the triangular pulse generated at the triangular wave generation part 2. The signal applied from the second comparing part 4 to the triac 9 through the trigger part 5 triggering a gate of the triac 9 controls phase of an alternative current varying input power to the washing machine motor 7, thereby controls speed of the washing machine motor 7.

However, the conventional device for controlling the speed of a washing machine motor has had problems of complicate and unstable control because, for reversing the motor 7, the motor 7 should be stopped to change over a switch provided outside of the motor 7 for changing winding of the motor 7 due to no built in means for reversing the motor 7 has been provided, and the motor 7 has exhibited great variation in number of revolutions due to low preciseness of the sine wave signal coming from conversion of the sine wave signal applied from the tachogenerator 6 to the rectification part 1 for detecting number of revolutions of the motor 7 into direct current voltage therein.

US-4, 972, 134 discloses a motor control circuit for operating a permanent split capacitor motor from an a.c. source. The motor control circuit causes the motor to accelerate and decelerate according to a velocity profile.

### SUMMARY OF THE INVENTION

The object of this invention is to provide methods and devices for controlling speed of a washing machine motor which enables to control water current of a washing machine at will by controlling direction of rotation and number of revolutions of the washing machine motor through controlling the phase of the input voltage applied to the washing machine motor.

According to the present invention there is provided a device for controlling speed of a washing machine motor comprising:
speed detection means for detecting number of revolutions of a washing machine motor; a microcomputer for generating ordering signals for controlling speed of rotation, direction of rotation and stoppage of a washing machine motor according to the number of revolutions of the washing machine motor received from the speed detection means; a digital/analogue conversion means for converting the ordering signals controlling the number of revolutions of the washing machine motor received from the microcomputer into analogue signal; a triangular wave generation means for generating triangular pulses by synchronizing to a zero crossing point of alternative current voltage; a comparing means for comparing signals received from the digital/analogue conversion means and the triangular wave generation means and generating trigger pulses according to the result of comparison of signals; a motor driving means for feeding alternative current to the washing machine motor for driving the washing machine motor in response to the ordering signals for controlling direction of rotation and stoppage of the washing machine motor received from the microcomputer together with the signals received from the comparing means and,
a synchronization circuit means for generating synchronizing signals for synchronizing to zero crossing point of an alternative current voltage applied to the washing machine motor and applying the synchronizing signals to the triangular wave generation means, wherein the synchronization circuit means includes a rectification means for rectifying alternative current applied thereto, a clamping means for clamping the rectified voltage received from the rectification means, a photocoupler for separating the signal received from the clamping means into alternative current and control signal and inverting the separated control signal, an NOT gate for inverting the signal received from the photocoupler, a delay means for delaying the signal received from the NOT gate, and an NAND gate for NAND operation of the signals received from the NOT gate and the delay means.

Advantageously the triangular wave generation means includes a capacitor for generating triangular pulses by charging and discharging, a discharge means for discharging the capacitor in response to the synchronization signals received from the synchronization means; and a charge means for charging the capacitor depending on the voltage of the power source.

Advantageously the motor driving means includes a phase controller for controlling phase of alternative current of the washing machine motor, and a phase controller driver for driving and controlling the phase controller in response to the order signals for controlling direction of rotation and stoppage of the washing machine motor received from the microcomputer and trigger pulses received from the comparing means. Preferably the phase controller driver includes a first AND gate for logic multiplying the trigger pulse received from the comparing means and the reverse rotation order signal received from the microcomputer for generating reverse rotation signal for the phase controller, a second AND gate for logic multiplying the trigger pulse received from the comparing means and the normal rotation order signal received from the microcomputer for generating normal rotation signal for the phase controller, a third AND gate for logic multiplying the reverse rotation order signal and the normal rotation order signal received from the microcomputer, and an NOR gate for NOR operation of the stop order signal received from the third AND gate and the microcomputer for generating an enable signal controlling operation of the first and the second AND gates. Preferably the phase controller includes a first photocoupler for separating the reverse rotation signal into alternative current and control signal and transmitting them, a second photocoupler for separating the normal rotation signal into alternative current and control signal and transmitting them, a first triac for applying alternative current to the washing machine motor in response to the signal received from the first photocoupler, and a second triac for applying alternative current to the washing machine motor in response to the signal received from the second photocoupler.

Advantageously the device further includes a phase angle detection means for detecting phase angle using the alternative current fed from the motor driving means to the washing machine motor and the order signal controlling the direction of rotation of the washing machine motor received from the microcomputer, and applying the detected phase angle to the triangular wave generation means to generate triangular pulses according to the detected phase angle. Preferably the phase angle detection means includes a first phase angle detector for detecting phase angle of the alternative current received from the motor driving means in response to the order signal for normal rotation received from the microcomputer, a second phase angle detector for detecting phase angle of the alternative current received from the motor driving means in response to the order signal for reverse rotation received from the microcomputer, and an OR gate for logical summation of the signals received from the first and the second phase angle detectors and applying the logic sum to the triangular wave generation means.

Preferably the first phase angle detector includes a rectifier for rectifying the alternative current fed from the motor driving means to the washing machine motor, a photocoupler made conductive in response to the rectified current received from the rectifier, and an AND gate for logic multiplying the signal received from the photocoupler and the order signal for normal rotation received from the microcomputer and applying the logic multiplied signal to the OR gate.

Preferably the second phase angle detector includes a rectifier for rectifying the alternative current fed from the motor driving means to the washing machine motor, a photocoupler made conductive in response to the rectified current received from the rectifier, and an AND gate for logic multiplying the signal received from the photocoupler and the order signal for normal rotation received from the microcomputer and applying the logic multiplied signal to the OR gate.

Advantageously the rectifier has bridge diodes.

Advantageously the device further includes a proportional integration means for applying speed error signals calculated through proportional integration based on the number of revolutions of the washing machine motor received from the speed sensing means and the signal received from the digital/analogue conversion means to the comparing means.

Preferably the speed sensing means has hole sensors. Preferably the proportional integration means includes a frequency/voltage converter for converting the number of revolutions of the washing machine motor received from the speed sensing means into voltage, and a proportional integrator for proportional integration of the signal received from the frequency/voltage converter and the signal received from the digital/analogue conversion means to generate speed error signal.

### BRIEF DESCRIPTION OF THE DRAWINGS

FIG.1 is a conventional device for controlling speed of a washing machine motor.

FIG. 2 is a device for controlling speed of a washing machine motor in accordance with one embodiment of this invention.

FIG. 3 is detail of the motor driving part of FIG 2.

FIG. 4 is detail of the phase controller driver of FIG. 3.

FIG. 5 is detail of the phase controller of FIG. 3.

FIG. 6 is detail of the synchronization circuit of FIG.2.

FIG. 7. is detail of the triangular wave generation part of FIG. 2.

FIGs. 8(a) to 8 (e) and 9 (a) to 9(f) show signal wave patterns at various parts of FIG. 2

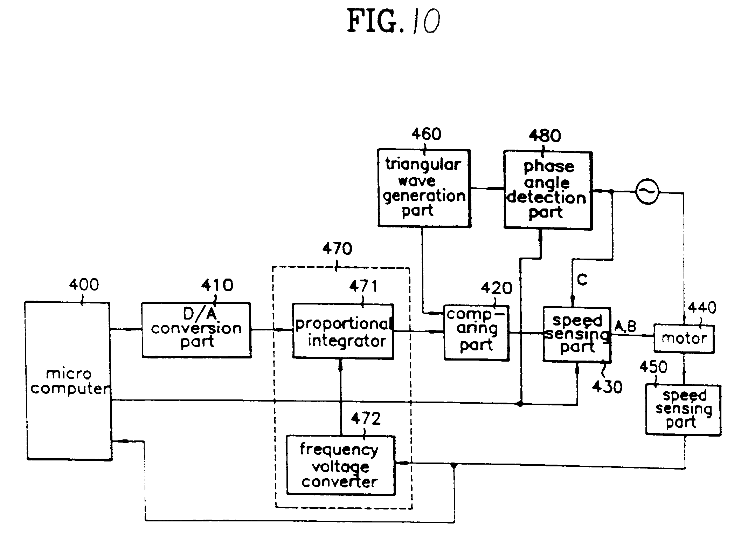

FIG.10 is a device for controlling speed of a washing machine motor in accordance with another embodiment of this invention.

FIG. 11 is detail of the phase angle detection part of FIG. 10.

### DETAILED DESCRIPTION OF THE INVENTION

Comprisal and operation of a device for controlling speed of a washing machine motor is to be explained hereinafter, referring to the attached drawings.

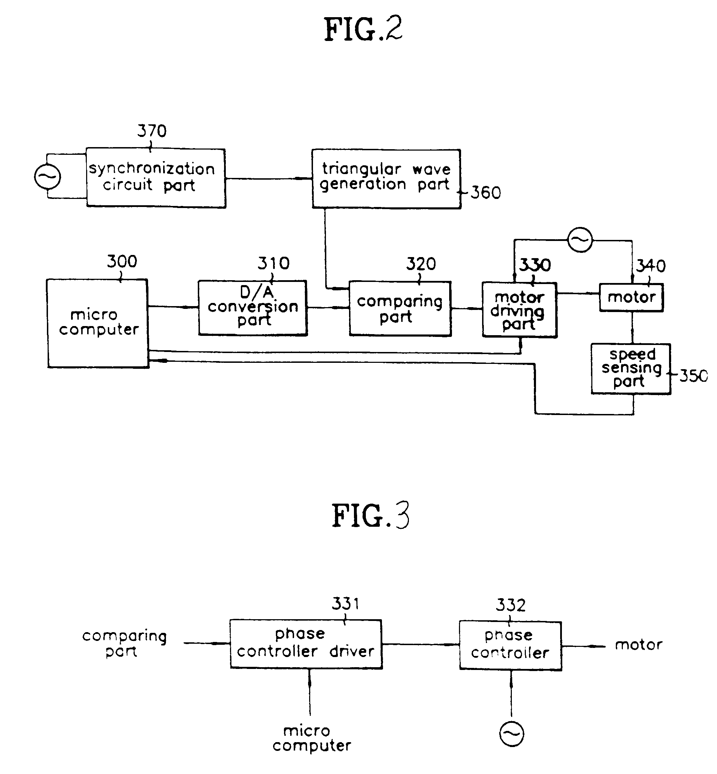

As shown in FIG 2, a device for controlling speed of a washing machine motor in accordance with one embodiment of this invention includes a microcomputer 300, a D/A conversion part 310, a comparing part 320, a motor driving part 330, a speed sensing part 350, a triangular wave generation part 360 and a synchronization circuit part 370.

The speed sensing part 350, sensing number of revolutions of the washing machine motor 340, applies it to the microcomputer 300, and the microcomputer 300 generates order signals for controlling speed of rotation, direction of rotation and stoppage of the washing machine motor 340 according to the number of revolutions of the washing machine motor received from the speed sensing part 350.

The D/A conversion part 310 converts the order signals for controlling the number of revolutions of the washing machine motor 340 received from the microcomputer 300 into analogue signals, and the triangular wave generation part 360, synchronizing to the zero crossing point of alternative current voltage, generates triangular pulses.

The comparing part 320, comparing signals received from the D/A conversion part 310 and the triangular wave generation part 360, generates trigger pulses, and the motor driving part 330 feeds alternative current to the washing machine motor 340 for driving the washing machine motor 340 in response to the order signals for controlling direction of rotation and stoppage of the washing machine motor 340 received from the microcomputer 300 and signals received from the comparing part 320.

The synchronization circuit part 370, generating synchronizing signals for synchronizing to zero crossing point of an alternative current voltage applied to the washing machine motor 340, applies the synchronizing signals to the triangular wave generation part 360.

Detail of the comprisal of the device for controlling speed of the washing machine motor in accordance with one embodiment of this invention is to be described hereinafter.

As shown in 3, the motor driving part 330 includes a phase controller 332 for controlling phase of the alternative current of the washing machine motor 340, and a phase controller driver 331 for driving and controlling the phase controller 332 in response to the order signals for controlling direction of rotation and stoppage of the washing machine motor 340 received from the microcomputer 300 and trigger pulses received from the comparing part 320.

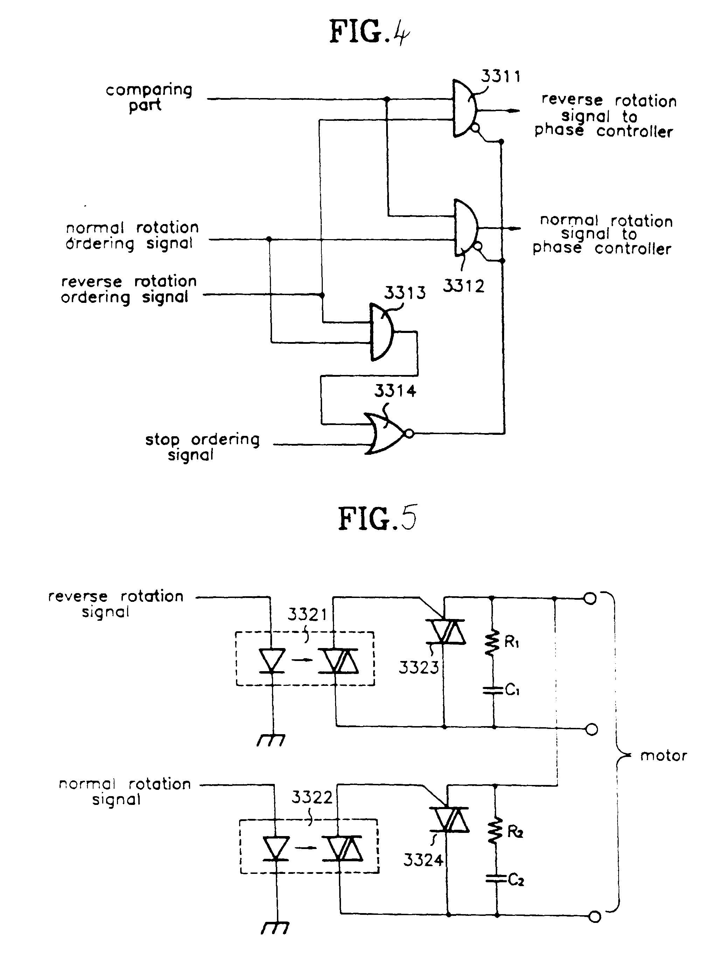

As shown in FIG. 4, the phase controller driver 331 includes a first AND gate 3311 for logic multiplying the trigger pulse received from the comparing part 320 and the reverse rotation order signal received from the microcomputer 300 for generating reverse rotation signal for the phase controller 332, a second AND gate 3312 for logic multiplying the trigger pulse received from the comparing part 320 and the normal rotation order signal received from the microcomputer 300 for generating normal rotation signal for the phase controller 332, a third AND gate 3313 for logic multiplying the reverse rotation order signal and the normal rotation order signal received from the microcomputer 300, and a NOR gate 3314 for NOR operation of the stop order signal received from the third AND gate 3313 and the microcomputer 300 for generating an enable signal controlling operation of the first and the second AND gates 3311 and 3312.

As shown in FIG. 5, the phase controller 3312 includes a first photocoupler 3321 for separating the reverse rotation signal into alternative current and control signal and transmitting them, and a second photocoupler 3322 for separating the normal rotation signal into alternative current and control signal and transmitting them, a first triac 3323 for applying alternative current to the washing machine motor 340 in response to the signal received from the first photocoupler 3321, a resistor R1 and a capacitor C1 connected in series to both ends of the first triac 3323, a second triac 3324 for applying alternative current to the washing machine motor 340 in response to the signal received from the second photocoupler 3322, and a resistor R2 and a capacitor C2 connected in series to both ends of the second triac 3324.

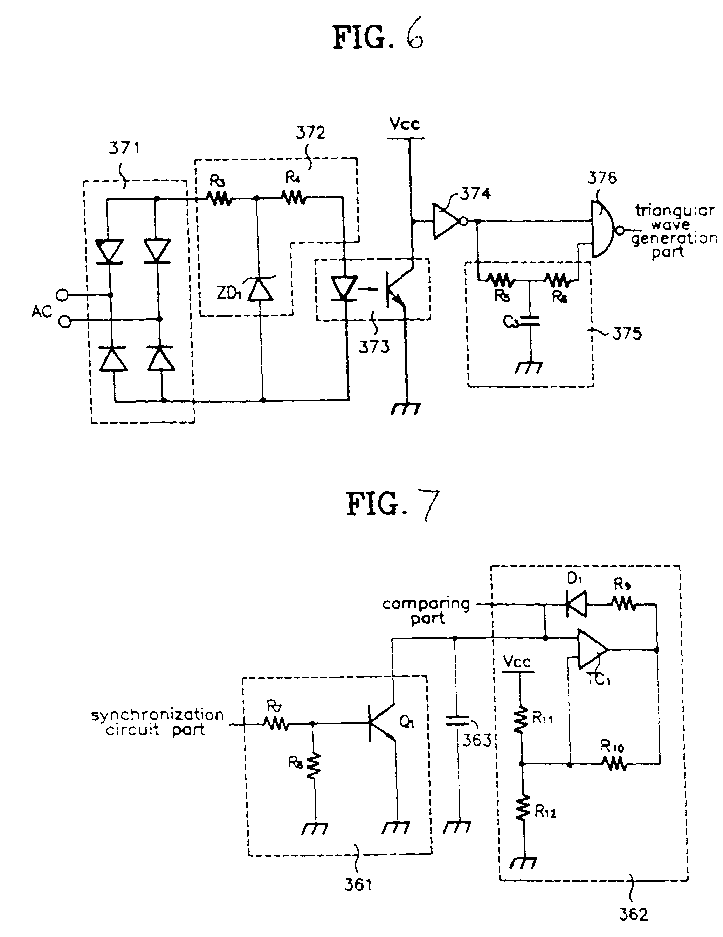

As shown in FIG. 6, the synchronization circuit part 370 includes a rectification part 371 having bridge diodes for rectifying alternative current applied thereto, a clamping part 372 having resistors R3 and R4 connected in series to the rectification part 371 and a zener diode ZD1 with a cathode thereon connected to the resistors R3 and R4 in parallel and an anode thereon connected to the other end of the rectification part 371 for clamping the rectified voltage received from the rectification part 371, a photocoupler 373 for separating the signal received from the clamping part 371 into alternative current and control signal and inverting the separated control signal, and an NOT gate 374 for inverting the signal received from the photocoupler 373, a delay part 375 having resistors R5 and R6 connected to the NOT gate 374 in series and a capacitor C3 with one end thereon connected to the resistors R5 and R6 in parallel and the other end thereon grounded for delaying the signal received from the NOT gate 374, and an NAND gate 376 for NAND operation of the signals received from the NOT gate 374 and the delay part 375.

As shown in FIG.7, the triangular wave generation part 360 includes a capacitor 363 for generating triangular pulses by charging and discharging, a discharge part 361 having a transistor Q1 with a collector thereon connected to the capacitor 363 for discharging the capacitor 363 in response to the synchronization signals received from the synchronization part 370, and a charge part 362 having a diode D1 with a cathode thereon connected to an input terminal of the comparing part 320 and a differential amplifier IC1 having input terminals thereon connected the cathode of the diode D1 and a power source Vcc respectively and an output terminal thereon connected to the anode of the diode D1 for charging the capacitor 362 depending on the voltage of the power source Vcc.

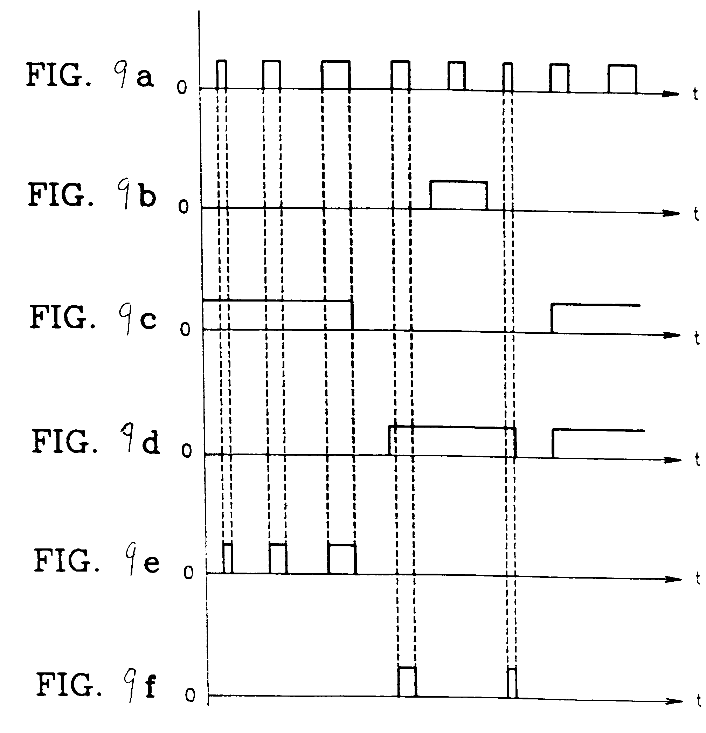

Operation of the device for controlling speed of a washing machine motor having the foregoing comprisal in accordance with one embodiment of this invention is to be explained hereinafter, referring to FIGs. 8(a) to 8(e) and 9(a) to 9(f).

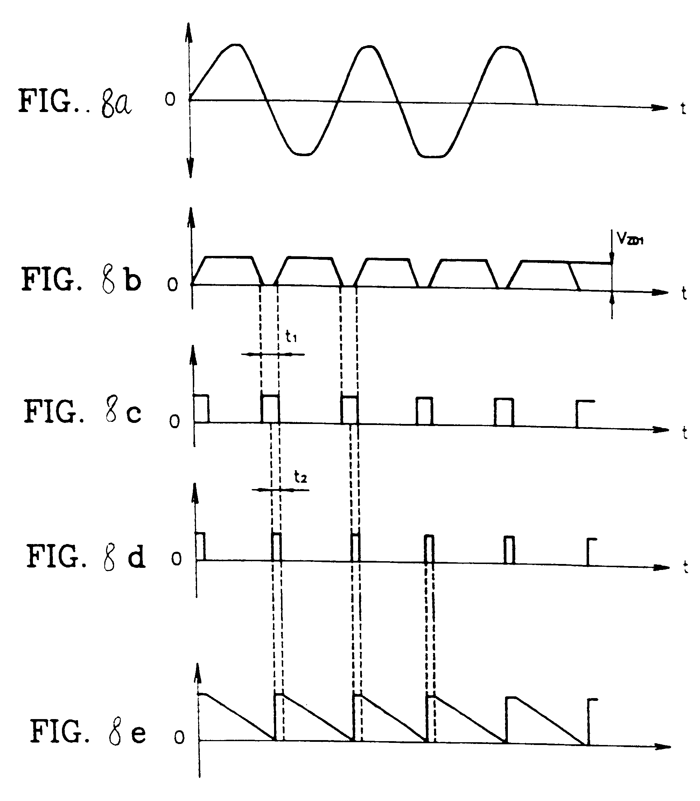

In case the wave pattern of alternative current power applied to the washing machine motor 340 is as shown in FIG. 8(a), the signal wave pattern rectified and clamped through the rectification part 371 and the clamping part 372 of the synchronization part 370 is as shown in FIG. 8(b), the signal wave pattern inverted through the photocoupler 373 is as shown in FIG. 8(c), and the signal wave pattern received from the delay part 375 and the NAND gate 376 and synchronized to the zero crossing point of the alternative current is as shown in FIG. 8(d).

The signal received from the synchronization circuit part 370 (FIG. 8(d) is converted into triangular pulses at the triangular wave generation part 360 as shown in FIG. 8(e).

On the other hand, the speed sensing part 350 senses speed of the washing machine motor 340 applies the sensed speed to the microcomputer 300, the microcomputer 300 issues orders on the number of revolutions and the direction of rotation for controlling the washing machine motor 340, and the order signal for controlling the number of revolutions of the washing machine motor 340 of the order signals received from the microcomputer 300 is,converted into digital signal at the D/A conversion part 310 and applied to a (-)input terminal of the comparing part 320.

The comparing part 320 compares the triangular pulses (FIG.8(e)) received from the triangular wave generation part 360 with the signal received from the D/A conversion part 310 to generate trigger pulses as shown in FIG. 9(a).

The trigger pulses (FIG. 9(a)) received from the comparing part 320 together with the order signals for stop, normal rotation and reverse rotation received from the microcomputer 300 are processed at the phase controller driver 331 to generate signal controlling the phase controller 332.

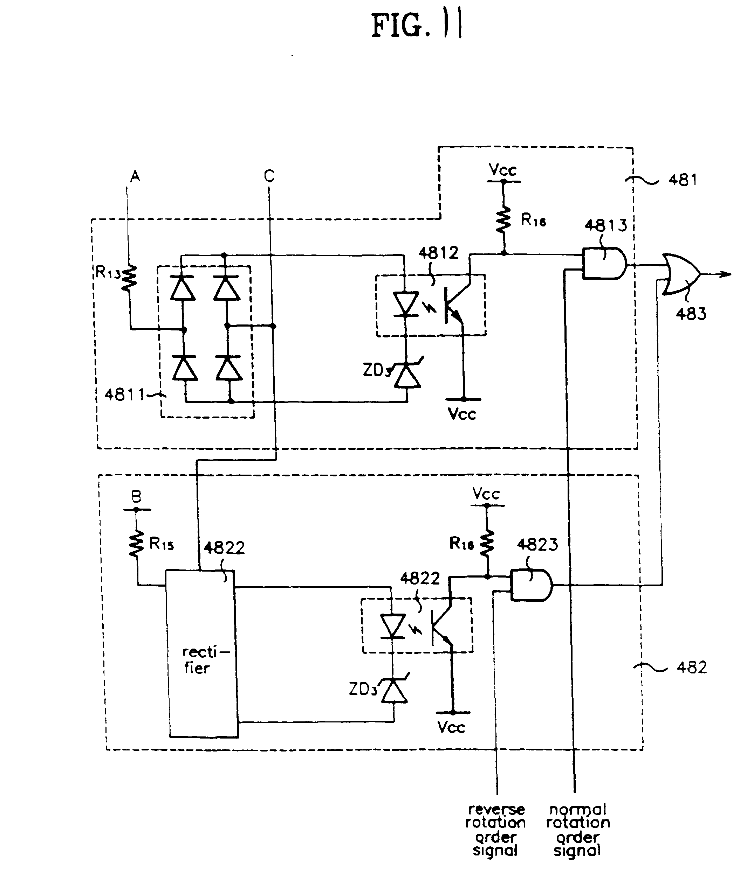

That is, only in case the trigger pulse (FIG. 9(a)) received from the comparing part 320 and the normal rotation order signal (FIG. 9(c)) received from the microcomputer 300 through the D/A conversion part 310 are at high level on the same time, the normal rotation order signal as shown in FIG 9 (e) is applied to the phase controller 332, only in case the trigger pulse (FIG. 9(a)) received from the comparing part 320 and the reverse rotation order signal (FIG. 9(d)) received from the microcomputer 300 through the D/A conversion part 310 are at high level on the same time, the reverse rotation order signal as shown in FIG.13(f) is applied to the phase controller 332, and in case either the stop order signal (FIG.13(b)) is received from the microcomputer 300 through the D/A conversion part 310 or the normal rotation order signal together with the reverse rotation order signal are received on the same time, neither normal rotation signal nor reverse rotation signal are issued either from the third AND gate 3313 or from the NOR gate 3314.

As has been explained, since, when the phase controller driver 3314 generates a reverse rotation signal or a normal rotation signal, the first photocoupler 3321 or the second photocoupler 3322 of the phase controller 332 makes the first triac 3321 or the second triac 3322 conductive to rotate the washing machine motor 340 in reverse or normal direction, and the speed can vary according to the level of the order signal issued from the microcomputer 300, the water current can be controlled at will.

As shown in FIG.14, a device for controlling speed of a washing machine motor in accordance with another embodiment of this invention includes a microcomputer 400, a D/A conversion part 410, a proportional integration part 470, a comparing part 420, a triangular wave generation part 460, a phase angle detection part 480, a motor driving part 430, and a speed sensing part 450.

The phase angle detection part 480 detects phase angle using the alternative current fed from the motor driving part 430 to the washing machine motor 440 and the order signal controlling the direction of rotation of the washing machine motor 440 received from the microcomputer 400, and applies the detected phase angle to the triangular wave generation part 460 to generate triangular pulses according to the detected phase angle.

The proportional integration part 470 includes a frequency/voltage converter 472 for converting the number of revolutions of the washing machine motor 440 received from the speed sensing part 450 into voltage, and a proportional integrator 471 for proportional integration of the signal received from the frequency/voltage converter 472 and the signal received from the D/A conversion part 410 to generate a speed error signal, thereby applies the speed error signals calculated through proportional integration based on the number of revolutions of the washing machine motor 440 received from the speed sensing part 450 and the signal received from the D/A conversion part 410 to the comparing part 420.

The comparing part 420 compares the signals received from the proportional integration part 470 and the triangular wave generation part 460 to generate trigger pulses, and the triangular wave generation part 460 generates triangular pulses according to the phase angle received from the phase angle detection part 480.

The microcomputer 400, the D/A conversion part 410, the motor driving part 430, and the speed sensing part 450 serves the same with those for the device for controlling speed of washing machine motor in accordance with one embodiment this invention.

Herein, the speed sensing part 450, consisting of hole sensors mostly, senses the number of revolutions and direction of rotation of the washing machine motor 440 and applies them to the microcomputer 400 to control speed of the washing machine motor 400.

As shown in FIG.11, the phase angle detection part 480 includes a first phase angle detector 481 for detecting phase angle of the alternative current received from the motor driving part 430 in response to the order signal for normal rotation received from the microcomputer 400, a second phase angle detector 482 for detecting phase angle of the alternative current received from the motor driving part 430 in response to the order signal for reverse rotation received from the microcomputer 400, and an OR gate 483 for logical summation of the signals received from the first and the second phase angle detectors 481 and 482 and applying the logic sum to the triangular wave generation part 460.

The first phase angle detector 481 includes a rectifier 4811 having bridge diodes for rectifying the alternative current fed from the motor driving part 430 to the washing machine motor 440, a photocoupler 4812 made conductive in response to the rectified current received from the rectifier 4811, and an AND gate 4813 for logic multiplying the signal received from the photocoupler 4812 and the order signal for normal rotation received from the microcomputer 400 and applying the logic multiplied signal to the OR gate 483.

The second phase angle detector 482 includes a rectifier 4821 having bridge diodes for rectifying the alternative current fed from the motor driving part 430 to the washing machine motor 440, a photocoupler 4822 made conductive in response to the rectified current received from the rectifier 4821, and an AND gate 4823 for logic multiplying the signal received from the photocoupler 4822 and the order signal for normal rotation received from the microcomputer 400 and applying the logic multiplied signal to the OR gate 483.

Operation of the foregoing device for controlling speed of a washing machine motor in accordance with another embodiment of this invention is to be explained hereinafter.

The order signal for controlling speed of the washing machine motor 440 received from the microcomputer 400 is converted into digital signal at the D/A conversion part 410 and applied to the proportional integration part 471. And the speed of the washing machine motor 440 sensed at the speed sensing part 450 is converted into frequency signal which is converted again into voltage at the frequency/voltage conversion part 472 and applied to the proportional integrator 471.

Signals received from both the frequency/voltage conversion part 472 and the D/A conversion part 410 are proportionally integrated to an error signal corresponding to error at the proportional integrator 471 proportional to a proportional constant and an integration constant.

And the phase angle detection part 480 detects phase angle
using the alternative current fed from the motor driving part 430 to the washing machine motor 440 and the order signal for controlling the direction of rotation of the washing machine motor 440 received from the microcomputer 400, and the triangular wave generation part 460 generate triangular pulses according to the phase angle received from the phase angle detection part 480.

Error signal applied from the proportional integration part 471 to the comparing part 420 is compared with triangular pulse generated in the triangular wave generation part 460 and applied to the motor driving part 430, and the motor driving part 430 drives the washing machine motor 440 rotating in normal and reverse direction in response to the signal received from the comparing part 420.

That is, since signal received from the comparing part 420 becomes a signal for controlling the timing of power feed as the result of comparison of the error between the order speed signal of the microcomputer 400 and the actual speed of the washing machine motor 440 with the triangular pulse corresponding to the phase angle of the power fed to the washing machine motor 440, making the motor driving part 430 to feed power to the washing machine motor 440 to enable to control a phase power, the washing machine motor can be driven at a desired speed.

Speed of the washing machine motor 440 driven as the foregoing operational process is, detected and converted into frequency signal proportional to the number of revolutions at the speed sensing part 450, and fed back to the microcomputer 400.

The microcomputer 400 compares the fed back frequency signal corresponding to the speed of the washing machine motor 440 with a preset order speed and applies a speed order signal corresponding to the difference of the compared speed to the D/A conversion part 410 to control the washing machine motor 440 to operate at the preset order speed through the foregoing process.

And the frequency applied from the speed sensing part 450 to the frequency/voltage conversion part 472 is converted to a voltage corresponding to the frequency, and applied to the proportional integration part 471 to generate a new error signal corresponding to the error.

And the phase angle detection part 480 detects phase angle according to the alternative current fed from the motor driving part 430 to the washing machine motor 440 and the order signal for controlling the direction of rotation of the washing machine motor 440 received from the microcomputer 400, and applies the detected phase angle to the triangular wave generation part 460 to enable to generate triangular pulses according to the detected phase angle.

The new error signal received from the proportional integrator 471 is compared with the triangular pulse received from the triangular wave generation part 460 through the comparing part 420 to enable the motor driving part 430 to control the washing machine motor 450.

As has been explained, this invention has advantages of facilitating convenient control of water current of a washing machine by controlling the direction of rotation and the number of revolutions of a washing machine motor through controlling the phase of input voltage applied to the washing machine motor, and improving quality and reliability of motors used in home electric appliances through precise speed control of the motors by applying this invention to refrigerators and air conditioners as well.

## Claims

1. A device for controlling speed of a washing machine motor comprising:
speed detection means for detecting number of revolutions of a washing machine motor;
a microcomputer for generating ordering signals for controlling speed of rotation, direction of rotation and stoppage of a washing machine motor according to the number of revolutions of the washing machine motor received from the speed detection means (350, 450) ;
a digital/analogue conversion means for converting the ordering signals controlling the number of revolutions of the washing machine motor received from the microcomputer into analogue signal;
a triangular wave generation means for generating triangular pulses by synchronizing to a zero crossing point of alternative current voltage;
a comparing means for comparing signals received from the digital/analogue conversion means and the triangular wave generation means and generating trigger pulses according to the result of comparison of signals;
a motor driving means (330, 430) for feeding alternative current to the washing machine motor (340, 440) for driving the washing machine motor in response to the ordering signals for controlling direction of rotation and stoppage of the washing machine motor received from the microcomputer (300,400) together with the signals received from the comparing means (320, 420); and,
a synchronization circuit means (370) for generating synchronizing signals for synchronizing to zero crossing point of an alternative current voltage applied to the washing machine motor (340,440) and applying the synchronizing signals to the triangular wave generation means (360,460).
characterized in that the synchronization circuit means (370) includes
a rectification means (371) for rectifying alternative current applied thereto,
a clamping means (372) for clamping the rectified voltage received from the rectification means (371),
a photocoupler (373) for separating the signal received from the clamping means (371) into alternative current and control signal and inverting the separated control signal,
a NOT gate (374) for inverting the signal received from the photocoupler,
a delay means (375) for delaying the signal received from the NOT gate (374), and
a NAND gate (376) for NAND operation of the signals received from the NOT gate (374) and the delay means (375).

2. The device as claimed in claim 1, wherein the triangular wave generation means (360) includes
a capacitor (363) for generating triangular pulses by charging and discharging,
a discharge means (361) for discharging the capacitor in response to the synchronization signals received from the synchronization means (370), and
a charge means (362) for charging the capacitor depending on the voltage of the power source.

3. The device as claimed in claim 1, wherein the motor driving means (330) includes
a phase controller (332) for controlling phase of the alternative current of the washing machine motor (340), and
a phase controller driver (331) for driving and controlling the phase controller in response to the order signals for controlling direction of rotation and stoppage of the washing machine motor (340) received from the microcomputer (300) and trigger pulses received from the comparing means (320).

4. The device as claimed in claim 3, wherein the phase controller driver includes
a first AND gate (3311) for logic multiplying the trigger pulse received from the comparing means (320) and the reverse rotation order signal received from the microcomputer (300) for generating reverse rotation signal for the phase controller (332),
a second AND gate (3312) for logic multiplying the trigger pulse received from the comparing means (320) and the normal rotation order signal received from the microcomputer (300) for generating normal rotation signal for the phase controller (332),
a third AND gate (3313) for logic multiplying the reverse rotation order signal and the normal rotation order signal received from the microcomputer (300), and
an NOR gate (3314) for NOR operation of the stop order signal received from the third AND gate (3313) and the microcomputer (300)for generating an enable signal controlling operation of the first and the second AND gates (3311, 3312).

5. The device as claimed in claim 4, wherein the phase controller (3312) includes
a first photocoupler (3321) for separating the reverse rotation signal into alternative current and control signal and transmitting them,
a second photocoupler (3322) for separating the normal rotation signal into alternative current and control signal and transmitting them,
a first triac (3323) for applying alternative current to the washing machine motor (340) in response to the signal received from the first photocoupler (3321), and
a second triac (3324) for applying alternative current to the washing machine motor (340) in response to the signal received from the second photccoupler (3322).

6. The device as claimed in claim 1, further including a phase angle detection means (480) for detecting phase angle using the alternative current fed from the motor driving means (430) to the washing machine motor (440) and the order signal controlling the direction of rotation of the washing machine motor (440) received from the microcomputer (400), and applying the detected phase angle to the triangular wave generation means (460) to generate triangular pulses according to the detected phase angle.

7. The device as claimed in claim 6, wherein the phase angle detection means (480) includes
a first phase angle detector (481) for detecting phase angle of the alternative current received from the motor driving means (430) in response to the order signal for normal rotation received from the microcomputer (400).
a second phase angle detector (482) for detecting phase angle of the alternative current received from the motor driving means (430) in response to the order signal for reverse rotation received from the microcomputer (400), and
an OR gate (483) for logical summation of the signals received from the first and the second phase angle detectors (481,482) and applying the logic sum to the triangular wave generation means (460).

8. The device as claimed in claim 7, wherein the first phase angle detector (481) includes
a rectifier (4811) for rectifying the alternative current fed from the motor driving means (430) to the washing machine motor (440),
a photocoupler (4812) made conductive in response to the rectified current received from the rectifier (4811), and
an AND gate (4813) for logic multiplying the signal received from the photocoupler (4812) and the order signal for normal rotation received from the microcomputer (400) and applying the logic multiplied signal to the OR gate (483).

9. The device as claimed in claim 7, wherein the second phase angle detector (482) includes
rectifier (4821) for rectifying the alternative current fed from the motor driving means (430) to the washing machine motor (440),
a photocoupler (4822) made conductive in response to the rectified current received from the rectifier (4821), and
an AND gate (4823) for logic multiplying the signal received from the photocoupler (4822) and the order signal for normal rotation received from the microcomputer (400) and applying the logic multiplied signal to the OR gate (483).

10. The device as claimed in claim 8, wherein the rectifier (4811) has bridge diodes.

11. The device as claimed in claim 9, wherein the rectifier (4821) has bridge diodes.

12. The device as claimed in claim 1, further including a proportional integration means (470) for applying speed error signals calculated through proportional integration based on the number of revolutions of the washing machine motor (440) received from the speed sensing means (450) and the signal received from the digital/analogue conversion means (410) to the comparing means (420).

13. The device as claimed in claim 12, wherein the speed sensing means (450) has hole sensors.

14. The device as claimed in claim 13, wherein the proportional integration means (470) includes
a frequency/voltage converter (472) for converting the number of revolutions of the washing machine motor (440) received from the speed sensing means (450) into voltage, and
a proportional integrator (471) for proportional integration of the signal received from the frequency/voltage converter (472) and the signal received from the digital/analogue conversion means (410) to generate speed error signal.

## Patentansprüche

1. Einrichtung zur Drehzahlsteuerung eines Waschmaschinenmotors, umfassend:
- Drehzahlerfassungsmittel (350, 450) zur Erfassung der Drehzahl eines Waschmaschinenmotors,
- einen Mikrocomputer (300, 400) zur Erzeugung von Befehlssignalen zum Steuern der Drehzahl, der Drehrichtung und des Anhaltens eines Waschmaschinenmotors (340, 440) nach Maßgabe der von den Drehzahlerfassungsmitteln (350, 450) erhaltenen Drehzahl der Waschmaschine,
- Digital/Analog-Wandlermittel (310, 410) zum Umwandeln der vom Mikrocomputer (300, 400) erhaltenen, die Drehzahl des Waschmaschinenmotors (340, 440) steuernden Befehlssignale in ein analoges Signal,
- Dreieckwellenerzeugungsmittel (360, 460) zur Erzeugung von Dreieckimpulsen durch Synchronisieren auf einen Nulldurchgangspunkt einer Wechselspannung,
- Vergleichermittel (320, 420) zum Vergleichen der von den Digital/Analog-Wandlermitteln und den Dreieckwellenerzeugungsmitteln erhaltenen Signale und zur Erzeugung von Triggerimpulsen nach Maßgabe des Ergebnisses des Signalvergleichs,
- Motortreibermittel (330, 430) zum Zuführen eines Wechselstroms zu dem Waschmaschinenmotor (340, 440) zwecks Antrieb des Waschmaschinenmotors in Antwort auf die vom Mikrocomputer (300, 400) erhaltenen Befehlssignale zur Steuerung der Drehrichtung und des Anhaltens des Waschmaschinenmotors zusammen mit den von den Vergleichermitteln (320, 420) erhaltenen Signalen, und
- Synchronisierungsschaltungsmittel (370) zur Erzeugung von Synchronisierungssignalen zur Synchronisierung auf einen Nulldurchgangspunkt einer an den Waschmaschinenmotor (340, 440) angelegten Wechselspannung und zum Anlegen der Synchronisierungssignale an die Dreieckwellenerzeugungsmittel (360, 460),
**dadurch gekennzeichnet**, daß die Synchronisierungsschaltungsmittel (370) umfassen:
- Gleichrichtmittel (371) zum Gleichrichten eines daran angelegten Wechselstroms,
- Klemmittel (372) zum Klemmen der von den Gleichrichtmitteln (371) erhaltenen gleichgerichteten Spannung,
- einen Photokoppler (373) zum Trennen des Signals von den Klemmitteln (372) in einen Wechselstrom und ein Steuersignal und zum Invertieren des separierten Steuersignals,
- ein NICHT-Gatter (374) zum Invertieren des von dem Photokoppler erhaltenen Signals,
- Verzögerungsmittel (375) zum Verzögern des von dem NICHT-Gatter (374) erhaltenen Signals und
- ein NICHT-UND-Gatter (376) zur NICHT-UND-Operation an den von dem NICHT-Gatter (374) und den Verzögerungsmitteln (375) erhaltenen Signalen.

2. Einrichtung nach Anspruch 1, bei der die Dreieckwellenerzeugungsmittel (360) umfassen:
- einen Kondensator (363) zur Erzeugung von Dreieckimpulsen durch Laden und Entladen,
- Entlademittel (361) zum Entladen des Kondensators in Antwort auf die von den Synchronisierungsmitteln (370) erhaltenen Synchronisierungssignale und
- Lademittel (362) zum Laden des Kondensators in Abhängigkeit von der Spannung der Energiequelle.

3. Einrichtung nach Anspruch 1, bei der die Motortreibermittel (330) umfassen:
- eine Phasensteuereinheit (332) zur Phasensteuerung des Wechselstroms des Waschmaschinenmotors (340) und
- einen Phasensteuereinheit-Treiber (331) zum Treiben und Steuern der Phasensteuereinheit in Antwort auf die von dem Mikrocomputer (300) erhaltenen Befehlssignale zur Steuerung der Drehrichtung und des Anhaltens des Waschmaschinenmotors (340) und die von den Vergleichermitteln (320) erhaltenen Triggerimpulse.

4. Einrichtung nach Anspruch 3, bei der der Phasensteuereinheit-Treiber umfaßt:
- ein erstes UND-Gatter (3311) zum logischen Multiplizieren des von den Vergleichermitteln (320) erhaltenen Triggerimpulses und des vom Mikrocomputer (300) erhaltenen Rückwärtsdrehungsbefehls-signals, um ein Rückwärtsdrehungssignal für die Phasensteuereinheit (332) zu erzeugen,
- ein zweites UND-Gatter (3312) zum logischen Multiplizieren des von den Vergleichermitteln (320) erhaltenen Triggerimpulses und des vom Mikrocomputer (300) erhaltenen Normaldrehungsbefehls-signals, um ein Normaldrehungssignal für die Phasensteuereinheit (332) zu erzeugen,
- ein drittes UND-Gatter (3313) zum logischen Multiplizieren des Rückwärtsdrehungsbefehlssignals und des Normaldrehungsbefehls-signals, die vom Mikrocomputer (300) erhalten werden, und
- ein NICHT-ODER-Gatter (3314) zur NICHT-ODER-Operation an dem vom dritten UND-Gatter (3313) und dem vom Mikrocomputer (300) erhaltenen Stoppbefehlssignal, um ein den Betrieb des ersten und des zweiten UND-Gatters (3311, 3312) steuerndes Freigabesignal zu erzeugen.

5. Einrichtung nach Anspruch 4, bei der die Phasensteuereinheit (3312) umfaßt:
- einen ersten Photokoppler (3321) zum Trennen des Rückwärts-drehungssignals in einen Wechselstrom und ein Steuersignal und zum Übertragen derselben,
- einen zweiten Photokoppler (3322) zum Trennen des Normal-drehungssignals in einen Wechselstrom und ein Steuersignal und zum Übertragen derselben,
- ein erstes Triac (3323) zum Anlegen eines Wechselstroms an den Waschmaschinenmotor (340) in Antwort auf das vom ersten Photokoppler (3321) erhaltene Signal und
- ein zweites Triac (3324) zum Anlegen eines Wechselstroms an den Waschmaschinenmotor (340) in Antwort auf das von dem zweiten Photokoppler (3322) erhaltene Signal.

6. Einrichtung nach Anspruch 1, ferner umfassend Phasenwinkelerfassungsmittel (480) zur Erfassung eines Phasenwinkels anhand des von den Motortreibermitteln (430) zum Waschmaschinenmotor (440) gelieferten Wechselstroms und des vom Mikrocomputer (400) erhaltenen, die Drehrichtung des Waschmaschinenmotors (440) steuernden Befehlssignals und zum Anlegen des erfaßten Phasenwinkels an die Dreieckwellenerzeugungsmittel (460) zur Erzeugung von Dreieckimpulsen nach Maßgabe des erfaßten Phasenwinkels.

7. Einrichtung nach Anspruch 6, bei der die Phasenwinkelerfassungsmittel (480) umfassen:
- einen ersten Phasenwinkeldetektor (481) zur Erfassung eines Phasenwinkels des Wechselstroms, der von den Motortreibermitteln (430) in Antwort auf das vom Mikrocomputer (400) erhaltene Befehlssignal zur Normaldrehung erhalten wird,
- einen zweiten Phasenwinkeldetektor (482) zur Erfassung eines Phasenwinkels des Wechselstroms, der von den Motortreibermitteln (430) in Antwort auf das vom Mikrocomputer (400) erhaltene Befehlssignal zur Rückwärtsdrehung erhalten wird, und
- ein ODER-Gatter (483) zur logischen Summation der von dem ersten und dem zweiten Phasenwinkeldetektor (481, 482) erhaltenen Signale und zum Anlegen der logischen Summe an die Dreieckwellenerzeugungsmittel (460).

8. Einrichtung nach Anspruch 7, bei der der erste Phasenwinkeldetektor (481) umfaßt:
- einen Gleichrichter (4811) zum Gleichrichten des von den Motortreibermitteln (430) zum Waschmaschinenmotor (440) gelieferten Wechselstroms,
- einen Photokoppler (4812), welcher in Antwort auf den vom Gleichrichter (4811) erhaltenen gleichgerichteten Strom leitend gemacht wird, und
- ein UND-Gatter (4813) zum logischen Multiplizieren des vom Photokoppler (4812) erhaltenen Signals und des vom Mikrocomputer (400) erhaltenen Befehlssignals zur Normaldrehung und zum Anlegen des logisch multiplizierten Signals an das ODER-Gatter (483).

9. Einrichtung nach Anspruch 7, bei der der zweite Phasenwinkeldetektor (482) umfaßt:
- einen Gleichrichter (4821) zum Gleichrichten des von den Motortreibermitteln (430) zum Waschmaschinenmotor (440) gelieferten Wechselstroms,
- einen Photokoppler (4822), welcher in Antwort auf den vom Gleichrichter (4821) erhaltenen gleichgerichteten Strom leitend gemacht wird, und
- ein UND-Gatter (4823) zum logischen Multiplizieren des vom Photokoppler (4822) erhaltenen Signals und des vom Mikrocomputer (400) erhaltenen Befehlssignals zur Normaldrehung und zum Anlegen des logisch multiplizierten Signals an das ODER-Gatter (483).

10. Einrichtung nach Anspruch 8, bei der der Gleichrichter (4811) Brükkendioden aufweist.

11. Einrichtung nach Anspruch 9, bei der der Gleichrichter (4821) Brükkendioden aufweist.

12. Einrichtung nach Anspruch 1, ferner umfassend Proportionalintegrationsmittel (470) zum Anlegen von Drehzahlfehlersignalen, welche durch proportionale Integration auf Grundlage der von den Drehzahlerfassungsmitteln (450) erhaltenen Drehzahl des Waschmaschinenmotors (440) und des von den Digital/Analog-Wandlermitteln (410) erhaltenen Signals berechnet werden, an die Vergleichermittel (420).

13. Einrichtung nach Anspruch 12, bei der die Drehzahlerfassungsmittel (450) Lochsensoren aufweisen.

14. Einrichtung nach Anspruch 13, bei der die Proportionalintegrationsmittel (470) umfassen:
- einen Frequenz-Spannungs-Wandler (472) zur Umwändlung der von den Drehzahlerfassungsmitteln (450) erhaltenen Drehzahl des Waschmaschinenmotors (440) in eine Spannung und
- einen Proportionalintegrator (471) zur proportionalen Integration des von dem Frequenz-Spannungs-Wandler (472) erhaltenen Signals und des von den Digital/Analog-Wandlermitteln (410) erhaltenen Signals, um ein Drehzahlfehlersignal zu erzeugen.

## Revendications

1. Dispositif pour commander la vitesse d'un moteur de machine à laver comprenant :
des moyens de détection de vitesse (350, 450) pour détecter le nombre de révolutions d'un moteur de machine à laver ;
un microcalculateur (300, 400) pour produire des signaux d'instruction pour commander la vitesse de rotation, le sens de rotation et l'arrêt d'un moteur de machine à laver (340, 440) selon le nombre de révolutions de la machine à laver reçu en provenance des moyens de détection de vitesse (350, 450) ;
des moyens de transformation numérique-analogique (310, 410) pour transformer les signaux d'instruction commandant le nombre de révolutions du moteur de machine à laver (340, 440) reçu en provenance du microcalculateur (300, 400) en signal analogique ;
des moyens de production d'onde triangulaire (360, 460) pour produire des impulsions triangulaires par synchronisation à un point de passage par zéro d'une tension alternative ;
des moyens de comparaison (320, 420) pour comparer des signaux reçus en provenance des moyens de transformation numérique-analogique et des moyens de production d'onde triangulaire et pour produire des impulsions de déclenchement selon le résultat de comparaison des signaux ;
des moyens de pilotage de moteur (330, 430) pour amener un courant alternatif au moteur de machine à laver (340, 440) pour piloter le moteur de machine à laver en réponse aux signaux d'instruction pour commander le sens de rotation et l'arrêt du moteur de machine à laver reçus en provenance du microcalculateur (300, 400) en même temps que les signaux reçus en provenance des moyens de comparaison (320, 420) ; et,
des moyens de circuit de synchronisation (370) pour produire des signaux de synchronisation pour une synchronisation au point de passage par zéro d'une tension alternative appliquée au moteur de machine à laver (340, 440) et pour appliquer les signaux de synchronisation aux moyens de production d'onde triangulaire (360, 460) ;
caractérisé en ce que les moyens de circuit de synchronisation (370) comprennent :
des moyens de redressement (371) pour redresser un courant alternatif appliqué à ces derniers,
des moyens de fixation de niveau (372) pour fixer le niveau de la tension redressée reçue en provenance des moyens de redressement (371),
un photocoupleur (373) pour séparer le signal reçu en provenance des moyens de fixation de niveau (371) en un courant alternatif et en un signal de commande et pour inverser le signal de commande séparé,
une porte NON (374) pour inverser le signal reçu en provenance du photocoupleur,
des moyens de retard (375) pour retarder le signal reçu en provenance de la porte NON (374), et une porte NON-ET (376) pour faire subir une opération logique NON-ET aux signaux reçus en provenance de la porte NON (374) et des moyens de retard (375).

2. Dispositif selon la revendication 1, dans lequel les moyens de production d'onde triangulaire (360) comprennent :
un condensateur (363) pour produire des impulsions triangulaires par charge et décharge,
des moyens de décharge (361) pour décharger le condensateur en réponse aux signaux de synchronisation reçus en provenance des moyens de synchronisation (370), et
des moyens de charge (362) pour charger le condensateur en fonction de la tension de la source de courant.

3. Dispositif selon la revendication 1, dans lequel les moyens de pilotage de moteur (330) comprennent :
une unité de commande de phase (332) pour commander la phase du courant alternatif du moteur de machine à laver (340), et
un dispositif de pilotage d'unité de commande de phase (331) pour piloter et commander l'unité de commande de phase en réponse aux signaux d'instruction pour commander le sens de rotation et l'arrêt du moteur de machine à laver (340) reçus en provenance du microcalculateur (300) et aux impulsions de déclenchement reçues en provenance des moyens de comparaison (320).

4. Dispositif selon la revendication 3, dans lequel le dispositif de pilotage d'unité de commande de phase comprend :
une première porte ET (3311) pour faire subir une multiplication logique à l'impulsion de déclenchement reçue en provenance des moyens de comparaison (320) et au signal d'instruction de rotation en sens inverse reçu en provenance du microcalculateur (300) pour produire un signal de rotation en sens inverse pour l'unité de commande de phase (332),
une deuxième porte ET (3312) pour faire subir une multiplication logique à l'impulsion de déclenchement reçue en provenance des moyens de comparaison (320) et au signal d'instruction de rotation en sens normal reçu en provenance du microcalculateur (300) pour produire un signal de rotation en sens normal pour l'unité de commande de phase (332),
une troisième porte ET (3313) pour faire subir une multiplication logique au signal d'instruction de rotation en sens inverse et au signal d'instruction de rotation en sens normal reçus en provenance du microcalculateur (300), et
une porte NON-OU (3314) pour faire subir une opération logique NON-OU au signal d'instruction d'arrêt reçu en provenance de la troisième porte ET (3313) et du microcalculateur (300) pour produire un signal de validation commandant le fonctionnement des première et deuxième portes ET (3311, 3312).

5. Dispositif selon la revendication 4, dans lequel l'unité de commande de phase (3312) comprend :
un premier photocoupleur (3321) pour séparer le signal de rotation en sens inverse en un courant alternatif et en un signal de commande et pour les transmettre,
un second photocoupleur (3322) pour séparer le signal de rotation en sens normal en un courant alternatif et en un signal de commande et pour les transmettre,
un premier triac (3323) pour appliquer un courant alternatif au moteur de machine à laver (340) en réponse au signal reçu en provenance du premier photocoupleur (3321), et
un second triac (3324) pour appliquer un courant alternatif au moteur de machine à laver (340) en réponse au signal reçu en provenance du second photocoupleur (3322).

6. Dispositif selon la revendication 1, comprenant de plus des moyens de détection d'angle de phase (480) pour détecter l'angle de phase en utilisant le courant alternatif amené en provenance des moyens de pilotage de moteur (430) à destination du moteur de machine à laver (440) et le signal d'instruction commandant le sens de rotation du moteur de machine à laver (440) reçu en provenance du microcalculateur (400), et pour appliquer l'angle de phase détecté aux moyens de production d'onde triangulaire (460) pour produire des impulsions triangulaires selon l'angle de phase détecté.

7. Dispositif selon la revendication 6, dans lequel les moyens de détection d'angle de phase (480) comprennent :
un premier détecteur d'angle de phase (481) pour détecter l'angle de phase du courant alternatif reçu en provenance des moyens de pilotage de moteur (430) en réponse au signal d'instruction pour une rotation en sens normal reçu en provenance du microcalculateur (400),
un second détecteur d'angle de phase (482) pour détecter l'angle de phase du courant alternatif reçu en provenance des moyens de pilotage de moteur (430) en réponse au signal d'instruction pour une rotation en sens inverse reçu en provenance du microcalculateur (400), et
une porte OU (483) pour faire subir une sommation logique aux signaux reçus en provenance des premier et second détecteurs d'angle de phase (481, 482) et pour appliquer la somme logique aux moyens de production d'onde triangulaire (460).

8. Dispositif selon la revendication 7, dans lequel le premier détecteur d'angle de phase (481) comprend :
un redresseur (4811) pour redresser le courant alternatif amené en provenance des moyens de pilotage de moteur (430) à destination du moteur de machine à laver (440),
un photocoupleur (4812) rendu conducteur en réponse au courant redressé reçu en provenance du redresseur (4811), et
une porte ET (4813) pour faire subir une multiplication logique au signal reçu en provenance du photocoupleur (4812) et au signal d'instruction de rotation en sens normal reçu en provenance du microcalculateur (400) et pour appliquer le signal multiplié logique à la porte OU (483).

9. Dispositif selon la revendication 7, dans lequel le second détecteur d'angle de phase (482) comprend :
un redresseur (4821) pour redresser le courant alternatif amené en provenance des moyens d'entraînement de moteur (430) à destination du moteur de machine à laver (440),
un photocoupleur (4822) rendu conducteur en réponse au courant redressé reçu en provenance du redresseur (4821), et
une porte ET (4823) pour faire subir une multiplication logique au signal reçu en provenance du photocoupleur (4822) et au signal d'instruction de rotation en sens normal reçu en provenance du microcalculateur (400) et pour appliquer le signal multiplié logique à la porte OU (483).

10. Dispositif selon la revendication 8, dans lequel le redresseur (4811) comporte des diodes montées en pont.

11. Dispositif selon la revendication 9, dans lequel le redresseur (4821) comporte des diodes montées en pont.

12. Dispositif selon la revendication 1, comprenant de plus des moyens d'intégration proportionnelle (470) pour appliquer des signaux d'erreur de vitesse calculés par intégration proportionnelle sur la base du nombre de révolutions du moteur de machine à laver (440) reçu en provenance des moyens de détection de vitesse (450) et du signal reçu en provenance des moyens de transformation numérique-analogique (410) aux moyens de comparaison (420).

13. Dispositif selon la revendication 12, dans lequel les moyens de détection de vitesse (450) comportent des capteurs à trous.

14. Dispositif selon la revendication 13, dans lequel les moyens d'intégration proportionnelle (470) comprennent :
un convertisseur fréquence/tension (472) pour transformer le nombre de révolutions du moteur de machine à laver (440) reçu en provenance des moyens de détection de vitesse (450) en tension, et
un intégrateur proportionnel (471) pour une intégration proportionnelle du signal reçu en provenance du convertisseur fréquence/tension (472) et du signal reçu en provenance des moyens de transformation numérique-analogique (410) pour produire un signal d'erreur de vitesse.
